Europäisches Patentamt

**European Patent Office**

**Office européen des brevets**

(19)

(11) Publication number: **0 088 459**
**A2**

# (12) EUROPEAN PATENT APPLICATION

(21) Application number: **83200205.9**

(51) Int. Cl.³: **B 01 D 13/00**

(22) Date of filing: **08.02.83**

(30) Priority: **04.03.82 NL 8200880**

(71) Applicant: **SHELL INTERNATIONALE RESEARCH MAATSCHAPPIJ B.V., Carel van Bylandtlaan 30, NL-2596 HR Den Haag (NL)**

(43) Date of publication of application: **14.09.83**
**Bulletin 83/37**

(72) Inventor: **Bitter, Johan George Albert, Badhuisweg 3, NL-1031 CM Amsterdam (NL)**

(84) Designated Contracting States: **BE CH DE FR IT LI SE**

(74) Representative: **Puister, Antonius Tonnis, Mr. et al, P.O. Box 302, NL-2501 CH The Hague (NL)**

(54) **Apparatus for mass transfer.**

(57) A spirally wound membrane unit in which the membrane is applied as an envelope thereby permitting passage of fluids along both sides of the membrane. The envelope may comprise spacing members.

0088459

APPARATUS FOR MASS TRANSFER

The invention relates to an apparatus for mass transfer from one fluid phase to another by using a membrane.

As usual the concept "fluid phase" embraces both the liquid and the gas or vapour phases of one or more components. However, not all of these components need in themselves be in the liquid or gaseous state; think, for instance, of a solid material dissolved in a liquid, the two forming a liquid phase. The concept "mass" in mass transfer may therefore relate to normally solid, liquid or gaseous materials.

Such apparatus as include a membrane are known. For practical reasons the membrane is brought into a specific form: flat membranes, tubular membranes and spirally wound membranes among other things have been developed. The first two types are such that flows can be maintained along both sides and consequently they are suitable for mass transfer from one fluid phase to another. However, these structures are very costly, especially when high pressures are to be used. They are also rather space intensive, viz. they do not attain a high packing density (expressed in $m^2$ membrane surface/$m^3$ volume of apparatus). The spirally wound membranes are more favourable from the economical point of view because they attain a considerably higher packing density and because the entire membrane can be eased into an enveloping tubular wall, after which very high pressures can be applied. However, in the forms of construction known up till now their range of application is limited because they have only one side along which a flow can be maintained; so that they are not suitable for use in processes where concentration gradients form the motive power.

According to the invention a spirally wound membrane is now proposed along both sides of which a flow can be maintained and which, therefore, is also suitable to be used for mass transfer from one fluid phase to another.

Accordingly, the invention provides an apparatus for mass transfer from one fluid phase to another by using a membrane, characterized in that the membrane has been wound spirally around a supply line for one fluid phase, which supply line is in open communication with a first channel situated on one flow side of a membrane along both sides of which a flow can be maintained, which channel in its turn is in open communication with a discharge line for said fluid phase, but closed on all other sides, while on the other flow side of the membrane there is a second channel one end of which is open for the supply of the other fluid phase and the other end for the discharge thereof, but all the other sides of which are closed.

The present apparatus may now be used in practically all the processes that are carried out using a membrane; for instance, in dialysis, reverse osmosis, hyperfiltration and mass transfer from one fluid phase to another, such as the scrubbing of flue gases or solvent extraction. The apparatus is particularly suitable for use in the processes for the separation of a liquid mixture which are described in Netherlands Patent Application No. 8200881 of even date, such as deasphaltenizing, dewaxing and certain extractions.

A drawback to the known apparatus which need no longer be felt is the occurrence of concentration polarization. This means the development of a surplus of certain components on one flow side of the membrane as a result of other components diffusing away through the membrane. The occurrence of concentration polarization can be prevented by raising the rate of flow along the membrane of the fluid phase involved, preferably in such a way that a molecule which can diffuse through the membrane passes along the membrane some 10 to 30 times before diffusing through it. This raising of the flow rate has now become possible on both sides of the membrane, since the membrane is one along both sides of which a flow can be maintained as distinct from the known single-sided-flow membranes on the other side of which there is only a very low flow rate — determined by the flux — and which will therefore always show partial concentration polarization.

The apparatus has both a separate supply line and a separate discharge line for one fluid phase which are connected to one another through a first channel. Preferably these two lines have parallel axes, so that winding the membrane spirally around the supply line will be a simple task.

In a certain embodiment the supply line and the discharge line are situated at opposite ends of the membrane — in unrolled condition; upon rolling up the supply line is in the centre of the roll and the discharge line at the outside of the roll. However, it is rather difficult subsequently to ease this device into an enveloping tube, since that enveloping tube will then have to be of a special shape.

Therefore, preference will be given to a different embodiment, viz. one in which the supply line and the discharge line for one fluid phase are in line and in contact with each other. This does not imply that said fluid phase can flow direct from the supply line to the discharge line — that remains only possible by way of the first channel situated on one flow side of the membrane along both sides of which a flow can be maintained. When the membrane is rolled in a spiral, both the supply line and the discharge line are in the centre of the roll and since the roll is practically circular in cross-section, it is easy to fit an enveloping tube around it.

The afore-mentioned first channel for one fluid phase is in open communication with the supply line. This is rendered possible, for instance, by the supply line being perforated or having a slit on one side. The first channel is bounded by the supply line and the discharge line, by seals along the sides of the membrane, by the membrane itself and optionally by an impermeable interlayer parallel to the membrane.

However, this interlayer is not needed in the preferred embodiment in which the membrane is constructed in the form of an envelope the interior of which constitutes the first channel which is open to both the supply line and the discharge line for one fluid phase. A simple way of making this envelope is to fold a rectangular sheet of membrane material in two, to insert the (perforated) supply line - optionally together with the discharge line - between the two layers into the fold and to seal off the remaining two or three sides of the membrane by means of a suitable glue or using a suitable welding technique. Then the envelope can be rolled around the supply line.

The second channel exists between the outer sides of the envelope, and the second fluid phase therein has a direction of flow which in principle runs parallel to the supply line and therefore substantially perpendicular to the direction of flow in the first channel. The direction of flow in the supply line may be parallel or anti-parallel to the direction of flow of the fluid phase in the second channel.

If the supply line and the discharge line are in line and in contact with each other, which preferably is the case, and if in addition the membrane is constructed in the form of an envelope, the envelope is preferably sealed off on the inside from the spot where the supply line and the discharge line touch, over a length of from 5 to 95 %, in particular of from 70 to 90 %, of the overall length of the envelope, in the direction perpendicular to the supply and discharge lines. Since the envelope is thus partly sealed off on the inside, it is rendered impossible for one fluid phase to flow along only a minor part of the membrane, viz. closely along the supply and discharge lines. Owing to the fact that this short route is cut off said fluid phase cannot but flow towards the opposite end in a direction perpendicular to the supply line first and subsequently, at the other side of the sealing, back again to the discharge line. In this way a much larger portion of the membrane surface is used for exchanging mass with the other fluid phase.

In order to allow the fluids to maintain an unobstructed flow between the membrane layers, so-called "spacers" are preferably applied. Preferably the interior of the envelope is fitted with a porous network which keeps the two internal flow sides of the membrane at a fixed distance from one another. Similarly, a porous network which keeps the two external flow sides of the membrane at a fixed distance from one another is preferably fitted against the outside of the envelope. In this way there may be networks both in the first channel (what is called "inner spacer") and in the second channel (what is called "outer spacer"). The complex made up of these two networks and two membrane layers is sometimes called the laminate.

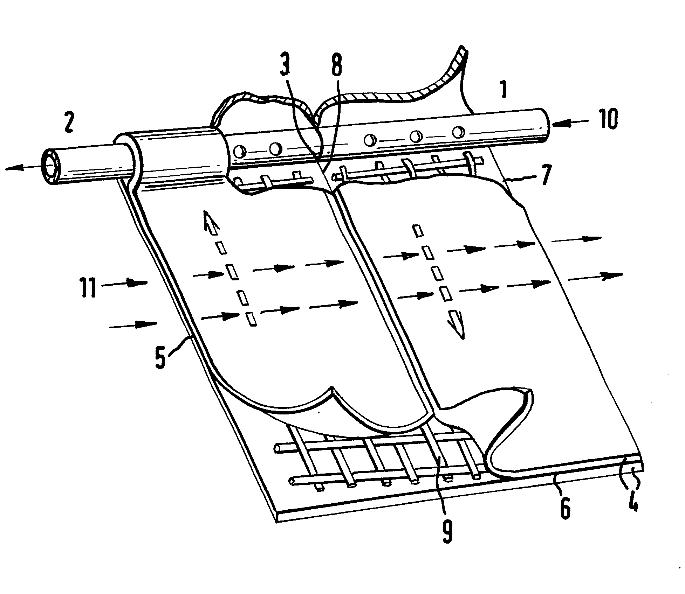

The invention is now further elucidated with the aid of the figure, which shows a preferred embodiment of the apparatus, in an unrolled and a partly cut-away version. For the sake of clarity the figure has not been made to show a scale drawing: certain parts have been enlarged or partly omitted.

The figure shows a supply line 1, constituting a whole with a discharge line 2, but with a partition 3 between these two pipes preventing flow-through. Since the apparatus has been constructed symmetrically, the direction of flow of one fluid phase may also be reversed to use supply line 1 as discharge line. Lines 1 and 2 are perforated along that part of their length where there exists a membrane 4. The membrane material usually has a length of many dm's, for instance 6 m, so that it can be wound around lines 1 and 2, which may have a diameter of from a couple of mm's to a couple of cm's, some tens to some hundreds of times. The length of lines 1 and 2 together may be a couple of dm's, for instance 1 m. The membrane material, for instance polypropylene, is, say, 0.1 to 10 m thick. It is for the intelligibility of the drawing only that these measures have not been rendered in proportion.

Membrane 4 has been brought into the form of an envelope

0088459

by folding it in two around lines 1 and 2 and sealing its sides (welded seams 5, 6 and 7). In addition there is a welded seam 8 in the envelope of membrane 4 running from partition 3 along about threequarters of the length of the membrane. Before membrane 4 was folded in two and sealed, a network 9 was provided to ensure free flow in the interior of the envelope. For the sake of clarity the network has been drawn coarser than it is in actual practice. Together with an exterior network not drawn the complex of the membrane envelope containing interior network 9 is rolled up spirally around lines 1 and 2. The resulting roll can then be eased into an enveloping tube and, optionally, retaining clips may be fitted to lines 1 and 2 in order to prevent the membrane roll from shifting laterally.

When the apparatus according to the invention is used, a fluid phase 10 flows through supply line 1 via the holes on the inside of the envelope and following the block arrows it finally flows through the holes into discharge line 2. A second fluid phase 11 follows the full arrows and flows along the other sides of the membrane envelope. If the membrane is permeable to certain components present in either or both of the fluid phases and if there is a difference in concentration of these components in the two phases, there will be transfer of this component from the phase with the highest concentration to the phase with the lowest concentration, via the membrane.

C L A I M S

1. An apparatus for mass transfer from one fluid phase to another by using a membrane, in which apparatus the membrane has been wound spirally around a supply line for one fluid phase, which supply line is in open communication with a first channel situated on one flow side of a membrane along both sides of which a flow can be maintained, which channel in its turn is in open communication with a discharge line for said fluid phase, but closed on all other sides, while on the other flow side of the membrane there is a second channel  one end of which is open for the supply of the other fluid phase and the other end for the discharge thereof, but all the other sides of which are closed.

2. An apparatus as claimed in claim 1, in which the supply line and the discharge line for one fluid phase are in line and in contact with each other.

3. An apparatus as claimed in claim 1 or 2, in which the membrane is constructed in the form of an envelope the interior of which constitutes the first channel which is in open communication with both the supply line and the discharge line for one fluid phase.

4. An apparatus as claimed in claim 2 and 3, in which the envelope is sealed off on the inside from the spot where the supply line and the discharge line touch, over a length of from 5 to 95 % of the overall length of the envelope in the direction perpendicular to the supply and discharge lines.

5. An apparatus as claimed in claim 3 or 4, in which the interior of the envelope is fitted with a porous network which keeps the two internal flow sides of the membrane at a fixed distance from one another.

6. An apparatus as claimed in claim 3, 4 or 5, in which a porous network which keeps the two external flow sides of the membrane at a fixed distance from one another is fitted against the outside of the envelope.

7.   An apparatus as claimed in claim 1, substantially as hereinbefore described, with reference to the figure.

8.   A process for the transfer of mass from one fluid phase to another, in which an apparatus as claimed in any one of the preceding claims is used.